# EUROPEAN PATENT APPLICATION

(11) **EP 1 388 941 A1**
(43) Date of publication of application: **11.02.2004**
(21) Application number: 03254679.8
(22) Date of filing: 25.07.2003
(51) Int. Cl.: H03K 19/0175, G06F 1/08

(54) **Field programmable device with dual-mode clock**

(30) Priority: 08.08.2002 GB 0218359
(71) Applicant: Anadigm Limited, Crewe, Cheshire CW1 6ZQ (GB)
(72) Inventor: Bratt, Adrian Harvey, Woore, Shropshire CW3 9ST (GB)
(74) Representative: Lambert, Ian Robert

(57) **Abstract**

There is disclosed a semiconductor device which is partitioned into at least a first and a second circuit partition, each of which requiring a clock signal, the device further comprising:
an oscillator producing a periodic output;
clock means for converting the periodic output into a first clock signal suitable for use with the first circuit partition and a second clock signal suitable for use with the second circuit partition; and
connection means for: supplying the periodic output, or a signal related thereto, to the clock means; supplying the first clock signal to the first circuit partition; and supplying the second clock signal to the second circuit partition.

## Description

This invention relates to clock systems in semiconductor devices with particular, but by no means exclusive, reference to devices having programmable analogue components, such as field programmable analogue arrays.

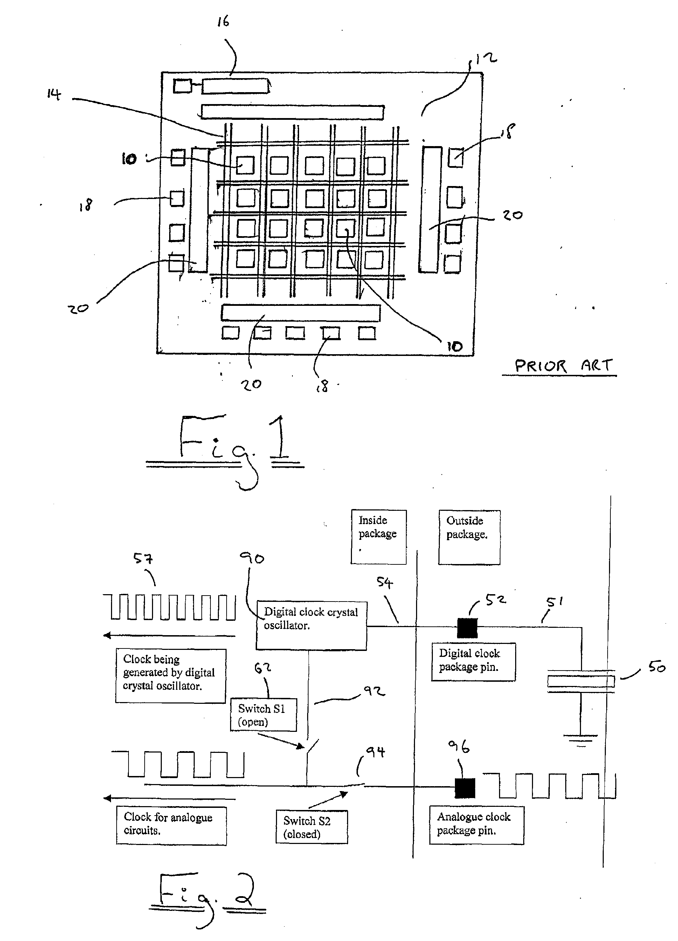

Field programmable analogue arrays (FPAAs) are a relatively recent development in the electronics industry which enable a user to quickly and flexibly design and implement an extremely wide range of analogue circuits. Figure 1 shows an example of an FPAA comprising an array of individual, configurable analogue blocks (CABs) 10 on a silicon chip 12. The CABs may be based on switched capacitor circuit technology, using capacitors which are integrated on silicon. A CAB might comprise a switched capacitor CMOS op amp, a comparator, an array of capacitors, CMOS switches and SRAM. The CABs are interconnected with configurable connections 14. Configurable Op amps 18, configurable band gap voltage references and other configurable analogue elements are also dispersed across the chip. Configurable I/O blocks 20 and other configurable elements are disposed on the periphery of the chip. Configuration of all the configurable elements on the chip is carried out using configuration logic 16. The configuration logic provides an interface to a configuration data source and implements a mechanism by which configuration data is loaded into configurable elements on the chip, thereby defining the functionality of the FPAA.

Thus, by inputting user controllable configuration data to the FPAA, the FPAA can be programmed to replicate the functions of a larger number of analogue components or circuits, for example rectifiers, sample and hold circuits, filters, and level detectors.

Such analogue arrays may operate in a number of different configuration modes. An analogue array may operate in partnership with a digital device such as a micro-processor, or it may operate with no digital partner, in which case the array needs to autonomously fetch configuration data from a memory device such as an EEPROM.

Operating with a digital device means that the clock for the configuration logic may be supplied by a digital controlling device. This clock is not necessarily periodic or stable in frequency, but it is required in order to properly synchronise the analogue array configuration logic to the controlling digital device. The analogue sections of the array are typically based on switched capacitor technology. For accurate performance, this technology requires a clock which is periodic and has a well defined frequency. These requirements conflict with those for the digital clock. Hence, analogue arrays have at least two distinct clock inputs to the chip. It is possible that other technologies, such as switched current techniques, might be utilised instead of switched capacitor technology. However, it is likely that the requirements for a clock which is periodic and processes a well defined frequency will remain.

In an environment where no clock from a digital controller is available, an analogue array still requires a clock signal to begin its configuration. The array also requires a clock signal which has stable frequency and period to drive the switched capacitor circuits. In this mode the chip needs to generate its own clocks.

A known programmable "system on a chip" microcontroller is produced by Cypress Micro Systems under the serial number CY8C26643. This device has the option of running with an external crystal and a crystal oscillator, or with an internal clock. There is no capacity to run with two external clocks and to choose between them. A family of microprocessors having analogue components on the same chip are produced by Cygnal Integrated Products Inc under the family serial number C8051F000. These devices have the options of either an internal oscillator, or an external crystal. It is possible to utilise an external clock, but only one external clock may be used. A known FPAA device is produced by Lattice Semiconductor Corp under the serial number ispPAC10. This device has no capability for utilising a crystal oscillator, and possesses a single clock input pin. No further functionality is provided, and it is only possible to use one clock.

The present invention provides clock functions for programmable analogue devices such as FPAAs using arrangements which require fewer components and are less expensive than prior art arrangements, and/or are more flexible and convenient in use. The invention is by no means exclusive to FPAAs. Rather, it can provide clock functions for any semiconductor device featuring two or more independent clock domains.

According to a first aspect of the invention there is provided a semiconductor device which is partitioned into at least a first and a second circuit partition, each of which requiring a clock signal, the device further comprising:
an oscillator producing a periodic output;
clock means for converting the periodic output into a first clock signal suitable for use with the first circuit partition and a second clock signal suitable for use with the second circuit partition; and
connection means for: supplying the periodic output, or a signal related thereto, to the clock means; supplying the first clock signal to the first circuit partition; and supplying the second clock signal to the second circuit partition.

The present invention recognises that the prior art arrangements which utilise two separate crystal oscillators are quite wasteful in terms of resource management, and that it is in fact possible to utilise a single oscillator to provide clock signals for both circuit partitions, even if the circuit partitions have conflicting requirements for the clock signals. As a result, only one oscillator is required rather than two, which can provide quite a significant reduction in the cost of manufacturing a device. A further advantage of such an arrangement is that the clocks for each of the circuit partitions are synchronous. Thus, for example, digital operations can be timed to occur during periods at which analogue circuits are insensitive to them. It will be appreciated that more than two circuit partitions might be supplied with clock signals by the clock means.

The second circuit partition may comprise one or more analogue components, which may be programmable. Typically, the first circuit partition comprises digital logic means.

The device may be an FPAA device, in which instance the programmable analogue components comprise a plurality of configurable analogue blocks.

The oscillator may be a single crystal, preferably a quartz crystal. Ceramic resonator elements might be used, as might canned oscillators (devices having active circuitry associated therewith).

The clock means may comprise:
a first clock device for providing the first clock signal; and
a second clock device for providing the second clock signal.

Preferably the first clock device acts as a master device and the second clock device acts as a slave device. In such embodiments, the connection means may supply the periodic output, or a signal related thereto, to the first clock oscillator; and the device may further comprise routing means for supplying the first clock signal to the second clock device. The routing means may comprise switching means for enabling and disabling the supply of the first clock signal to the second clock device.

In an alternative embodiment, the connection means supplies the periodic output, or a signal related thereto, to the first clock oscillator and the second clock oscillator.

In another embodiment, the clock means comprises a single clock device which provides both the first and the second clock signals; and
the connection means are adapted to carry the first clock signal from the clock device to the first circuit partition and carry the second clock signal from the clock device to the second circuit partition.

The connection means may comprise switching means for enabling and disabling the supply of the second clock signal to the second circuit partition.

The connection means may comprise one or more frequency dividers.

According to a second aspect of the invention there is provided a semiconductor device which is partitioned into at least a first and a second circuit partition, each of which requiring a clock signal, the device further comprising:
clock means for converting a periodic output of an oscillator into a first clock signal suitable for use with the first circuit partition and a second clock signal suitable for use with the second circuit partition; and
connection means for: supplying the period output, or a signal related thereto, to the clock means; supplying the first clock signal to the first circuit partition; and supplying the second clock signal to the second circuit partition;
in which the connection means comprises at least one input for inputting the periodic output to the device.

This is the form in which the device is generally supplied commercially, the user being required to supply and connect a suitable oscillator to the device.

The second circuit partition may comprise one or more analogue components, which may be programmable.

The device may be a field programmable analogue array device in which the programmable analogue components comprise a plurality of configurable analogue blocks.

The clock means may comprise:
a first clock device for providing the first clock signal; and
a second clock device for providing the second clock signal.

Preferably, the first clock device acts as a master device and the second clock device acts as a slave device. In such embodiments, the connection means may supply the periodic output, or a signal related thereto, to the first clock oscillator; and the device may further comprise routing means for supplying the first clock signal to the second clock device. The routing means may comprise switching means for enabling and disabling the supply of the first clock signal to the second clock device.

In an alternative embodiment, the connection means supplies the periodic output, or a signal related thereto, to the first clock oscillator and the second clock oscillator.

In another embodiment, the clock means comprises a clock device which provides both the first and the second clock signals; and
the connection means are adapted to carry the first clock signal from the clock device to the first circuit partition and carry the second clock signal from the clock device to the second circuit partition.

The connection means may comprise switching means for enabling and disabling the supply of the second clock signal to the second circuit partition.

The connection means may comprise one or more frequency dividers.

Embodiments of devices in accordance with the invention will now be described with reference to the accompanying drawings, in which:-
- Figure 1: shows an example of a FPAA device;
- Figure 2: shows a fourth embodiment of the invention;
- Figure 3: shows a first embodiment of the invention with an open switch;
- Figure 4: shows the first embodiment with a closed switch;
- Figure 5: shows a second embodiment of the invention; and
- Figure 6: shows a third embodiment of the invention.

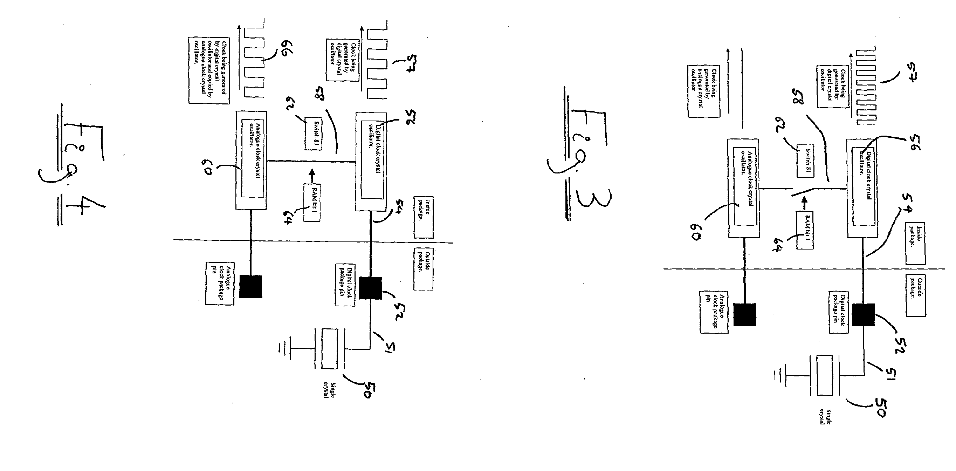

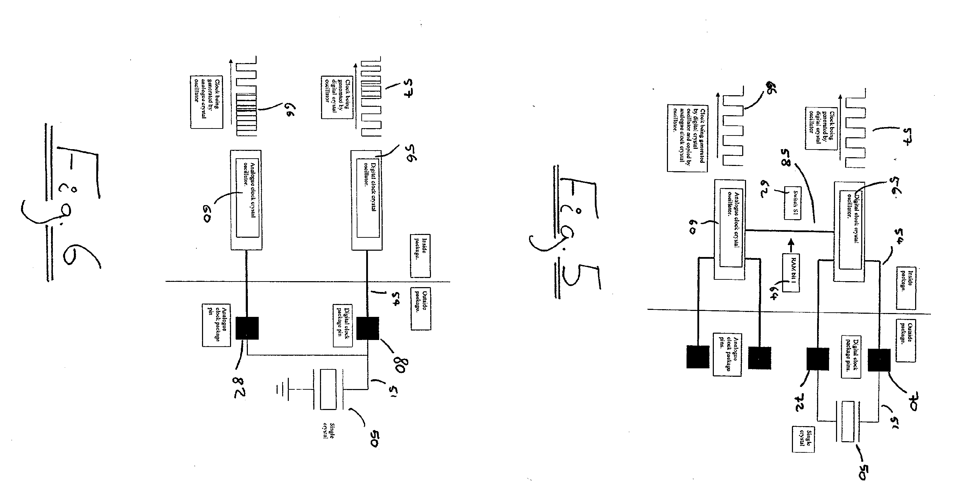

Figure 3 shows an embodiment of a device according to the invention. The device comprises a single crystal 50 which produces a periodic output, this output being fed into a programmable analogue array device via first connection 51 and package pin 52. In this embodiment, the other connection to the crystal oscillator 50 is earthed, although the connection could be left floating. The periodic output is fed by way of a second connection 54 to a first (digital) clock crystal oscillator 56 which contains active circuitry adapted to provide a first clock signal 57 of a form suitable for synchronising the digital logic areas (not shown) of the programmable analogue array device. The first clock signal 57 is also fed into a routing connection 58 to a second (analogue) clock crystal oscillator 60 which contains active circuitry adapted to provide a second clock signal (not shown) of a form suitable for the programmable analogue components (not shown) of the programmable analogue array device. The routing connection 58 comprises a switch 62 which can open and close the routing connection 58 and thereby determine whether the first clock signal is inputted to the second clock crystal oscillator 60.

The operation of the device will now be explained.

On device power-up, the device loads configuration data from a memory device such as an EEPROM. At this stage, no analogue clock signal is required and the switch 62 is open (as shown in Figure 3). Thus, the second (analogue) crystal oscillator 60 is inoperative. During loading of the configuration data, the first clock crystal oscillator 56 uses the periodic output to provide the first clock signal 57 for the digital logic areas of the array device.

After configuration is completed, the device is programmed to use the first (digital) clock crystal oscillator 56 as a master clock, and to drive the second (analogue) clock crystal oscillator 60 as a slave clock. This is achieved by closing the switch 62, which can be accomplished by the setting of a RAM bit 64 on the device. Figure 4 depicts the device with the switch 62 closed. The second (analogue) clock crystal oscillator 60 then acts as a slave to the first (digital) crystal oscillator 56, accepting the first clock signal 57 via the routing connection 58 and producing a second clock signal 66 (shown in Figure 4) for the analogue components (such as switched capacitor sections). In other words, a single crystal 50 is used to drive both digital and analogue clock functions.

The present invention exploits *inter alia* the fact that the requirements on the digital clock are relatively modest. The digital clock only needs to operate in the range of a few MHZ to begin fetching data from a memory device such as an EEPROM. During this period, the analogue components are inactive and no analogue clock is required. Furthermore, after configuration is complete, the main clock requirement is to provide a clock signal for the analogue components, although the digital functions remain active to load further data if so commanded. The device shown in Figure 3 provides the required analogue clock capability after configuration is completed, but enables the digital clock to be 'tapped' when necessary. In this way, analogue and digital clock functions are provided in a stable manner using a single oscillator component.

Figure 5 shows a second embodiment which is related to the embodiment depicted in Figure 3. Identical numerals are used in Figure 5 to denote elements which are shared with Figure 3. The embodiment shown in Figure 5 differs from the embodiment shown in Figure 3 by virtue of it being a dual pin system in which the output of the single crystal oscillator 50 is fed into the programmable analogue array device via two package pins, 70, 72. In this way a simpler oscillator circuit is provided.

Figure 6 shows a third embodiment which again shares a number of the elements of Figure 3, with shared numerals being used to denote such shared elements. In the third embodiment, the single crystal 50 is directly connected to the first clock crystal oscillator 56 via package pin 80 and is directly connected to the second clock crystal oscillator 60 via package pin 82. It is possible to use a two pin arrangement of the type shown in Figure 5 instead of a one pin arrangement. This embodiment is less preferred owing to possible interference from parasitic components and between connections: nevertheless, the embodiment of Figure 6 represents an aspect of the present invention.

Figure 2 depicts a fourth embodiment in which a single clock crystal oscillator is used to provide clock signals for both digital and analogue components. Numerous elements in the embodiment depicted in Figure 2 are identical to elements of the embodiment depicted in Figure 3. Identical numerals are used in Figure 2 to denote such elements which are shared with Figure 3. In the fourth embodiment, the periodic output of the single crystal 50 is fed by way of a second connection 54 to a clock crystal oscillator 90. The clock crystal oscillator 90 provides a first clock signal 57 of a form suitable for synchronising the digital logic areas (not shown) of the programmable analogue array device. Clock signal from the clock crystal oscillator 90 is also fed into a routing connection 92 to the analogue components (not shown) of the programmable analogue array device. The routing connection 92 comprises a switch 62 which can open and close the routing connection 92 and thereby determine whether the first clock signal is directed towards the analogue components. Thus, the fourth embodiment differs from the first embodiment principally by virtue of employing a single crystal oscillator. Typically, the digital logic areas require a clock of ca. 16 to 40 MHZ frequency. In the fourth embodiment, the frequency of first clock signal, if necessary, can be reduced in order to provide a clock signal of a frequency suitable to drive the analogue components. This can be done by disposing one or more frequency dividers (not shown) in the routing connection 92.

On device power-up, the device loads configuration data from a memory device such as an EEPROM. At this stage, no analogue clock signal is required and the switch 62 is open, as shown in Figure 2. During loading of the configuration data, the clock crystal oscillator 90 uses the periodic output to provide the first clock signal 57 for the digital logic areas of the array device.

After configuration is completed, the switch 62 is closed and thus the output of the clock crystal oscillator 90 is used to drive both digital and analogue clock functions.

The analogue components can utilise a clock signal which derives from an externally driven source. In this instance, the switch 62 is open, and switch 94 is closed. The externally driven analogue clock signal would be fed to the device via analogue clock package pin 96. Additionally, a user could, if desired, utilise a clock signal deriving from an externally driven source to synchronise the digital logic area of the device. The externally driven digital clock signal would be fed to the device via digital clock package pin 52. It is understood that these instances are not examples of the invention. Rather, the purpose is to indicate how devices of the present invention can be adapted for use with other control regimes.

## Claims

1. A semiconductor device which is partitioned into at least a first and a second circuit partition, each of which requiring a clock signal, the device further comprising:
an oscillator producing a periodic output;
clock means for converting the periodic output into a first clock signal suitable for use with the first circuit partition and a second clock signal suitable for use with the second circuit partition; and
connection means for: supplying the periodic output, or a signal related thereto, to the clock means; supplying the first clock signal to the first circuit partition; and supplying the second clock signal to the second circuit partition.

2. A device according to claim 1 in which the second circuit partition comprises one or more analogue components.

3. A device according to claim 2 in which the analogue components are programmable.

4. A field programmable analogue array device according to claim 3 in which the programmable analogue components comprise a plurality of configurable analogue blocks.

5. A device according to any of claims 1 to 4 in which the oscillator is a single crystal, preferably a quartz crystal.

6. A device according to any of claims 1 to 5 in which the clock means comprises:
a first clock device for providing the first clock signal; and
a second clock device for providing the second clock signal.

7. A device according to claim 6 in which the first clock device acts as a master device and the second clock device acts as a slave device.

8. A device according to claim 7 in which:
the connection means supplies the periodic output, or a signal related thereto, to the first clock oscillator;
and the device further comprises routing means for supplying the first clock signal to the second clock device.

9. A device according to claim 8 in which the routing means comprises switching means for enabling and disabling the supply of the first clock signal to the second clock device.

10. A semiconductor device which is partitioned into at least a first and a second circuit partition, each of which requiring a clock signal, the device further comprising:
clock means for converting a periodic output of an oscillator into a first clock signal suitable for use with the first circuit partition and a second clock signal suitable for use with the second circuit partition; and
connection means for: supplying the periodic output, or a signal related thereto, to the clock means; supplying the first clock signal to the first circuit partition; and supplying the second clock signal to the second circuit partition;
in which the connection means comprises at least one input for inputting the periodic output to the device.

11. A device according to claim 10 in which the second circuit partition comprises one or more analogue components.

12. A device according to claim 11 in which the analogue components are programmable.

13. A field programmable analogue array device according to claim 12 in which the programmable analogue components comprise a plurality of configurable analogue blocks.

14. A device according to any of claims 10 to 13 in which the clock means comprises:
a first clock device for providing the first clock signal; and
a second clock device for providing the second clock signal.

15. A device according to claim 14 in which the first clock device acts as a master device and the second clock device acts as a slave device.

16. A device according to claim 15 in which:
the connection means supplies the periodic output, or a signal related thereto, to the first clock oscillator;
and the device further comprises routing means for supplying the first clock signal to the second clock device.

17. A device according to claim 16 in which the routing means comprises switching means for enabling and disabling the supply of the first clock signal to the second clock device.
